# EUROPEAN PATENT SPECIFICATION

(11) **EP 3 336 223 B1**
(45) Date of publication and mention of the grant of the patent: **30.11.2022**
(21) Application number: 17207234.0
(22) Date of filing: 14.12.2017
(51) Int. Cl.: C25D 3/66, C25D 5/10, F01D 5/28, C25D 7/00

(54) **FAN BLADE WITH PROTECTIVE CLADDING AND METHOD OF MAKING**
LÜFTERSCHAUFEL MIT SCHUTZMANTEL UND VERFAHREN ZUR HERSTELLUNG
PALE DE VENTILATEUR COMPORTANT UN GAINAGE PROTECTEUR ET SON PROCÉDÉ DE FABRICATION

(30) Priority: 14.12.2016 US 201615378740
(43) Date of publication of application: 20.06.2018
(73) Proprietor: Raytheon Technologies Corporation, Farmington, CT 06032 (US)
(72) Inventor: CHEN, Lei, South Windsor, CT Connecticut 06074 (US); JAWOROWSKI, Mark R., Glastonbury, CT Connecticut 06033 (US)
(74) Representative: Dehns

(56) References cited:
- US-A1- 2014 178 710
- US-A1- 2016 208 813
- US-A1- 2016 298 252

## Description

### BACKGROUND

This disclosure relates to protecting a hybrid metal fan blade from corrosion.

In a turbofan engine, lighter components generally lead to more efficient performance. Forming the blade from a lightweight metallic material can reduce cost and weight. But without additional support or reinforcement, airfoils made solely from most lightweight metals or alloys do not offer sufficient strength and longevity for long-term use.

For example, even the strongest commercially available bulk aluminum alloys do not alone possess the ductility and resiliency necessary to meet current regulatory and design standards or acceptable maintenance intervals. Blades made solely of 2XXX-, 6XXX- or 7XXX- series aluminum alloys, for example, are lighter in weight and less costly to produce. However, without additional fortification against foreign objects, such unprotected aluminum blades are susceptible to rapid deterioration and shorter lifecycles under normal operating conditions from damage caused by small and large scale impacts.

Reinforcing and protecting leading portions of a lightweight blade, such as a blade made from an aluminum alloy, can reduce the weight of the blade while meeting or exceeding current design and safety requirements. It has been found that adding a protective sheath over the forward airfoil edge of a lightweight airfoil can prevent a significant amount of such damage and slow degradation of the blade. Combining a lightweight airfoil, such as one formed from an aluminum alloy, to name just one non-limiting example, with a high- strength metal sheath, like one formed from a titanium, titanium alloys, a nickel alloys, or steel, to name just three non-limiting examples, gives the blade substantially all of the strength and protection of a blade made solely from a titanium alloy. A lightweight low-cost metallic material in the airfoil offers significant cost and weight savings by restricting the use of the more expensive and higher-strength material to the sheath. The sheath directs the strength and resiliency of the stronger material to the most vulnerable locations of the blade, including the leading edge and those portions of the pressure and suction surfaces proximate the leading edge.

However, multi-material assembled fan blades, consisting of, but not limited to, a sheath and a blade body made of dissimilar conductive materials, such as metals, create a galvanic potential. Currently, a non-conductive adhesive is used to bond the sheath to the blade. The non-conductive adhesive therefore provides an insulative layer that prevents the flow of electrons in the potential galvanic current. This adhesive can have gaps in coverage allowing electrons to flow between the two dissimilar materials, which can potentially lead to accelerated corrosion. US 2014/0178710 discloses a coated aluminium component having an electro deposited layer of aluminium alloyed with a transition metal or rare earth element. US 2016/208813 A1 discloses a fan blade assembly having an airfoil in which the airfoil has a forward edge covered by a sheath, where the airfoil and sheath are made from dissimilar materials.

Accordingly, it is desirable to provide improved protection from galvanic corrosion.

### BRIEF DESCRIPTION

In a first aspect there is provided a fan blade assembly according to claim 1.

The galvanic corrosion protection layer and the impact protection layer may comprise aluminum and the same transition metal.

In some aspects of the disclosure, the galvanic corrosion protection layer may have a thickness of 5 to 50 micrometers and the impact protection layer may have a thickness of 25 to 100 micrometers. In some aspects of the disclosure, the impact protection layer has a greater thickness than the galvanic corrosion protection layer.

According to the invention, the galvanic corrosion protection layer includes pure aluminum or aluminum and a transition metal. The impact protection layer includes aluminum and a transition metal. The galvanic corrosion protection layer and the impact protection layer may comprise aluminum and the same transition metal.

In some aspects of the disclosure, the galvanic corrosion protection layer may have a thickness of 5 to 50 micrometers and the impact protection layer may have a thickness of 25 to 100 micrometers.

In another aspect there is provided a method of making a fan blade assembly according to claim 6.

In some aspects of the disclosure, cleaning may include grit blasting, polishing, degreasing, etching with alkaline solution, cleaning with acidic solution, or a combination thereof.

In some aspects of the disclosure, electrodeposition employs an ionic liquid. The ionic liquid may include 1-ethyl-3-methylimidazolium chloride or 1-butyl-3-methylimidazolium chloride.

In some aspects of the disclosure, the method may further include polishing the impact protection layer.

In some aspects of the disclosure, the galvanic corrosion protection layer has a thickness of 5 to 50 micrometers and the impact protection layer has a thickness of 25 to 100 micrometers.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a schematic representation of a gas turbine engine having a fan blade;
FIG. 2 is a schematic representation of a fan assembly;
FIG. 3 is a schematic representation of a fan blade;
FIG. 4 is a schematic representation of a cross section of a fan blade; and
FIG. 5 is a schematic representation of a cross section of a protective material.

### DETAILED DESCRIPTION

Referring now to the Figures, where the disclosure will be described with reference to specific embodiments, without limiting same, it is to be understood that the disclosed embodiments are merely illustrative and may be embodied in various and alternative forms. The Figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

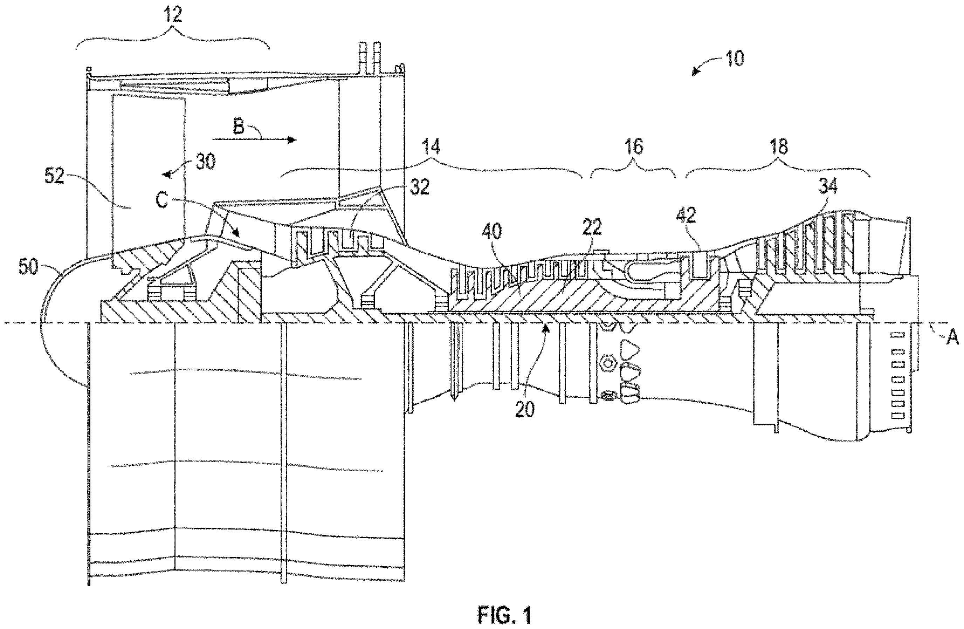

Referring to FIG. 1 a schematic representation of a gas turbine engine 10 is shown. The gas turbine engine includes a fan section 12, a compressor section 14, a combustor section 16, and a turbine section 18 disposed about a longitudinal axis A. The fan section 12 drives air along a bypass flow path B that may bypass the compressor section 14, the combustor section 16, and the turbine section 18. The compressor section 14 draws air in along a core flow path C where air is compressed by the compressor section 14 and is provided to or communicated to the combustor section 16. The compressed air is heated by the combustor section 16 to generate a high pressure exhaust gas stream that expands through the turbine section 18. The turbine section 18 extracts energy from the high pressure exhaust gas stream to drive the fan section 12 and the compressor section 14.

The gas turbine engine 10 further includes a low-speed spool 20 and a high-speed spool 22 that are configured to rotate the fan section 12, the compressor section 14, and the turbine section 18 about the longitudinal axis A. The low-speed spool 20 may connect a fan 30 of the fan section 12 and a low-pressure compressor portion 32 of the compressor section 14 to a low-pressure turbine portion 34 of the turbine section 18. The high-speed spool 22 may connect a high pressure compressor portion 40 of the compressor section 14 and a high pressure turbine portion 42 of the turbine section 18.

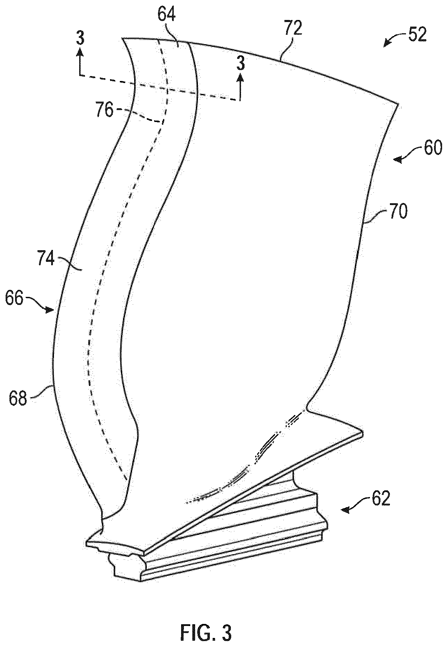

The fan 30 includes a fan rotor or fan hub 50 that carries a fan blade 52. The fan blade 52 radially extends from the fan hub 50. The fan blade 52 may be a lightweight composite fan blade that includes an airfoil 60 that radially extends between a root 62 and a tip 64 as shown in FIG. 3.

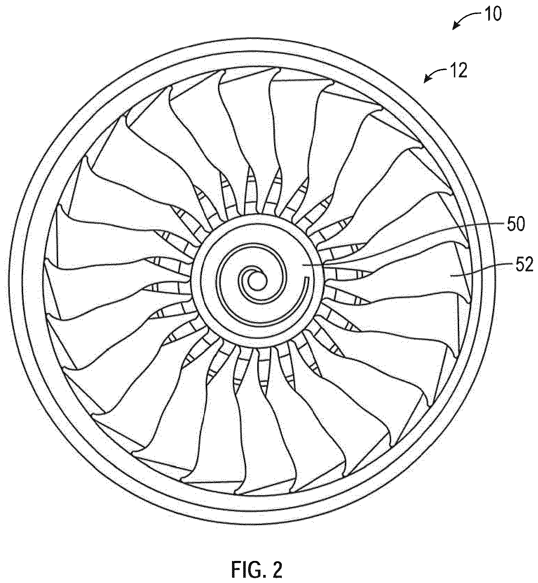

A more detailed view of the fan 12 of the gas turbine engine 10 is shown in FIG. 2. The fan 12 may have a plurality of fan blades 52 connected to a central hub 50, as shown. One or more of the fan blades 52 may comprise an air foil 60 formed from an aluminum alloy or aluminum. The airfoils 60 (and/or compressor airfoils) formed from aluminum or an aluminum alloy may exhibit enhanced resistance against localized corrosion by virtue of a protective material deposited on at least a portion of their outer and/or inner surfaces (see further details below). The protective material comprises a galvanic corrosion protection layer to protect the airfoils from galvanic corrosion by providing a material that may be corroded preferentially relative to the airfoil Al alloy and sacrificed before the underlying aluminum alloy or aluminum materials of the airfoils 30 are affected. Accordingly, the protective material may improve the structural stability and extend the operative lifetime of the airfoils 60. As another possibility, the airfoils 60 may be airfoils in the compressor section of the gas turbine engine, and may be protected from corrosion by the protective material.

A side view of exemplary fan blade 52 is shown in FIG. 3, which includes cross section 3-3. As seen in FIG. 3, four parts form fan blade 52: airfoil 60, sheath 66, tip 64, and root 62. Blade 52 has leading edge 68 and trailing edge 70. Fan blade 52 also includes tip edge 72, sheath head section 74, and forward airfoil edge 76.

Leading edge 68 and trailing edge 70 extend generally span wise in a curved manner to tip edge 72. Air flows chordwise from leading edge 68 over the surface of the fan blade, meeting at trailing edge 70. Root 62 links fan blade 52 to a disk or rotor (not shown) in fan section 12. Here root 62 is shown as a "dovetail" root; however, such an arrangement is not required. Alternatively, fan blade 52 can have a different configuration of root, or the root can be incorporated with the disk in what is known in the art as an integral rotor blade configuration.

Sheath 66 covers a portion of airfoil 60 proximal forward airfoil edge 76, extending span wise over at least a part of the length of leading edge 68 between root 62 and tip edge 72. Forward airfoil edge 76 is represented by a broken line extending span wise along sheath 66. It has been found that adding protective sheath 66 over forward airfoil edge 76 of lightweight airfoil 60 can prevent a significant amount of damage and slow degradation of fan blade assembly 52.

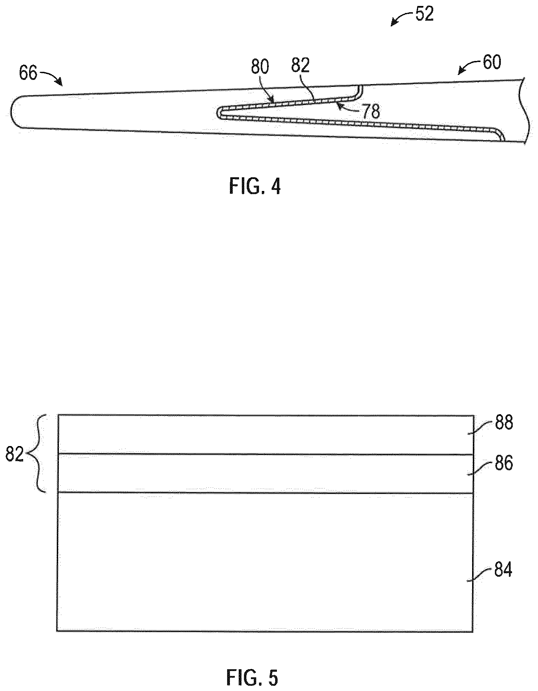

FIG. 4 depicts a partial cross-section of fan blade 52 taken across line 3-3 of FIG. 3. It is at the sheath receiving surface 78/airfoil contact surface 80 that the possibility of a galvanic potential arises. If there is a gap in coverage of the nonconductive adhesive that covers the sheath receiving surface 78/airfoil contact surface 80, then a galvanic potential difference will be created between the dissimilar materials of the airfoil 60 and sheath 66. Therefore, as shown in FIG. 4, the sheath receiving surface 78 of airfoil 60 is cladded with a protective material 82 prior to bonding the sheath 66 to the airfoil 60. The protective material covers the sheath receiving surface 78 and may extend beyond the sheath receiving surface. Electrochemical deposition is used to apply the protective material.

As shown in FIG. 5, the protective material 82 comprises a galvanic corrosion protection layer 86 disposed on component 84 and an impact protection layer 88 disposed on galvanic corrosion protection layer 86. The impact protection layer 88 comprises aluminum or an aluminum alloy. In the event that the impact protection layer 88 is breached the galvanic corrosion protection layer will be preferentially corroded - thus protecting the component 84 underneath.

The galvanic corrosion protection layer 86 comprises pure aluminum, or aluminum alloyed with a transition metal. "Pure" as used herein describes a material which comprises trace levels of impurities, typically less than or equal to 100 ppm by weight. Exemplary transition metals or alloying elements include indium, manganese, gallium, zinc, and silicon. By employing a transition metal such as indium the resulting material is more susceptible to corrosion, especially galvanic corrosion, than the aluminum alloy used in the underlying component. The transition metal may be present in an amount less than or equal to 1.5 wt%, based on the total weight of the sacrificial layer.

The impact protection layer 88 comprises aluminum and a transition metal. Exemplary transition metals include manganese. Electrodeposited Al-Mn alloys have been shown to exhibit a wide range of structural and performance characteristics such as hardness and corrosion resistance (Ref.: 1. Gery R. Stafford, J. Electrochem. Soc., Vol. 136, No. 3, (1989*);* 2. T. Moffat et al. J. Electrochem. Soc., Vol. 140, No. 10, (1993*);* 3. Ruan, S. & Schuh, C. A. Acta Materialia 57, 3810-3822 (2009*)).* In some embodiments the impact protection layer comprises a nanocrystalline or amorphous material. The transition metal may be present in an amount of 0.5 wt% to 30 wt% based on the total weight of the impact protection layer.

It is also contemplated that the galvanic corrosion protection layer and the impact protection layer may comprise aluminum and the same transition metal. The amount of the transition metal may be varied or the variables associated with electrodeposition may be varied so that the sacrificial layer has a greater susceptibility to corrosion.

A method of applying a protective material comprises cleaning an aluminum substrate; electrodepositing a galvanic corrosion protection layer; and electrodepositing an impact protection layer. The aluminum substrate may be cleaned by grit blasting, polishing, degreasing, etching with alkaline solutions, cleaning with acidic solutions or a combination thereof. After cleaning the sacrificial layer is disposed on the clean surface of the aluminum substrate by electrodeposition using an ionic liquid. Exemplary ionic liquids include 1-ethyl-3-methylimidazolium chloride or 1-butyl-3-methylimidizolium chloride. Once the sacrificial layer has been deposited the impact protection layer can be deposited on the sacrificial layer, also by electrodeposition using an ionic liquid. In some embodiments, the electrodeposition bath composition is the same for both the sacrificial layer and the impact protection layer but the electrodeposition potential is varied to achieve a larger crystal structure in the sacrificial layer with different concentrations than in the impact protection layer. In some embodiments, the bath composition for the sacrificial layer is different from the bath composition for the impact protection layer. In some embodiments both the bath composition and the electrodeposition potential are varied between the sacrificial layer and the impact protection layer.

The thickness of the galvanic corrosion protection layer and the impact protection layer in the protective material may be varied depending on the desired qualities of the protective material. In some embodiments the impact protection layer is deposited in excess and then polished to achieve the desired thickness and improve the quality of the protective material. In some embodiments electrochemical polishing is used. Additionally, the thickness of the galvanic corrosion protection layer and the impact protection layer can be varied over the surface of the component in order to tailor the protection provided by the coating to needs of the component. Exemplary thicknesses for the galvanic corrosion protection layer are 5 to 100 micrometers, or, more specifically 10 to 40 micrometers. Exemplary thicknesses for the impact protection layer are 5 to 100 micrometers, or, more specifically, 50 to 100 micrometers.

After the protective layer is deposited it may be passivated by anodizing and sealing.

The sheath is then joined to the protective material using an adhesive.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the appended claims. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A fan blade assembly comprising an aluminum airfoil (60) including a sheath receiving surface (78); and a conductive sheath (66) comprising an airfoil contact surface (80); wherein the sheath receiving surface comprises a protective material (82); wherein the protective material comprises a galvanic corrosion protection layer (86) disposed on the aluminum airfoil and an impact protection layer (88) disposed on the galvanic corrosion protection layer, wherein the galvanic corrosion protection layer (86) comprises aluminum having less than 100 ppm impurities or aluminum and a transition metal, and the impact protection layer (88) comprises aluminum and a transition metal; and the airfoil contact surface (80) of the conductive sheath is bonded to the sheath receiving surface of the airfoil.

2. The fan blade assembly of claim 1, wherein the galvanic corrosion protection layer (86) consists of pure aluminum having less than 100 ppm impurities.

3. The fan blade assembly of claim 1, wherein the galvanic corrosion protection layer (86) and the impact protection layer (88) comprise aluminum and the same transition metal.

4. The fan blade assembly of any preceding claim, wherein the galvanic corrosion protection layer has a thickness of 5 to 50 micrometers and the impact protection layer has a thickness of 25 to 100 micrometers.

5. The fan blade assembly of any preceding claim, wherein the impact protection layer (88) has a greater thickness than the galvanic corrosion protection layer (86).

6. A method of making a fan blade assembly comprising cleaning an aluminum airfoil; electrodepositing a galvanic corrosion protection layer (86) on the aluminum airfoil; electrodepositing an impact protection layer (88) on the galvanic corrosion protection layer; and adhesively bonding a conductive sheath (60) to the impact protection layer (88), wherein the galvanic corrosion protection layer (86) comprises aluminum having less than 100 ppm impurities or aluminum and a transition metal, and the impact protection layer (88) comprises aluminum and a transition metal.

7. The method of claim 6, wherein cleaning comprises grit blasting, polishing, degreasing, etching with alkaline solution, cleaning with acidic solution, or a combination thereof.

8. The method of claim 6 or 7, wherein electrodeposition employs an ionic liquid.

9. The method of claim 8, wherein the ionic liquid comprises 1-ethyl-3-methylimidazolium chloride or 1-butyl-3-methylimidazolium chloride.

10. The method of any of claims 6 to 9, further comprising polishing the impact protection layer (88).

11. The method of any of claims 6 to 10, wherein the galvanic corrosion protection layer (86) has a thickness of 5 to 50 micrometers and the impact protection layer (88) has a thickness of 25 to 100 micrometers.

## Patentansprüche

1. Lüfterschaufelbaugruppe, umfassend ein Aluminium-Schaufelprofil (60), das eine Hüllenaufnahmefläche (78) beinhaltet; und eine leitfähige Hülle (66), die eine Schaufelprofilkontaktfläche (80) umfassst; wobei die Hüllenaufnahmefläche ein Schutzmaterial (82) umfasst; wobei das Schutzmaterial eine galvanische Korrosionsschutzschicht (86), die an dem Aluminium-Schaufelprofil angeordnet ist, und eine Aufprallschutzschicht (88), die auf der galvanischen Korrosionsschutzschicht angeordnet ist, umfasst, wobei die galvanische Korrosionsschutzschicht (86) Aluminium mit weniger als 100 ppm Verunreinigungen oder Aluminium und ein Übergangsmetall umfasst und die Aufprallschutzschicht (88) Aluminium und ein Übergangsmetall umfasst; und die Schaufelprofilkontaktfläche (80) der leitfähigen Hülle mit der Hüllenaufnahmefläche des Schaufelprofils verbunden ist.

2. Lüfterschaufelbaugruppe nach Anspruch 1, wobei die galvanische Korrosionsschutzschicht (86) aus reinem Aluminium mit weniger als 100 ppm Verunreinigungen besteht.

3. Lüfterschaufelbaugruppe nach Anspruch 1, wobei die galvanische Korrosionsschutzschicht (86) und die Aufprallschutzschicht (88) Aluminium und dasselbe Übergangsmetall umfassen.

4. Lüfterschaufelbaugruppe nach einem der vorhergehenden Ansprüche, wobei die galvanische Korrosionsschutzschicht eine Dicke von 5 bis 50 Mikrometern aufweist und die Aufprallschutzschicht eine Dicke von 25 bis 100 Mikrometern aufweist.

5. Lüfterschaufelbaugruppe nach einem der vorhergehenden Ansprüche, wobei die Aufprallschutzschicht (88) eine größere Dicke als die galvanische Korrosionsschutzschicht (86) aufweist.

6. Verfahren zur Herstellung einer Lüfterschaufelbaugruppe, umfassend Reinigen eines Aluminium-Schaufelprofils; Elektroabscheiden einer galvanischen Korrosionsschutzschicht (86) auf dem Aluminium-Schaufelprofil; Elektroabscheiden einer Aufprallschutzschicht (88) auf der galvanischen Korrosionsschutzschicht; und Verkleben einer leitfähigen Hülle (60) mit der Aufprallschutzschicht (88), wobei die galvanische Korrosionsschutzschicht (86) Aluminium mit weniger als 100 ppm Verunreinigungen oder Aluminium und ein Übergangsmetall umfasst und die Aufprallschutzschicht (88) Aluminium und ein Übergangsmetall umfasst.

7. Verfahren nach Anspruch 6, wobei das Reinigen Kiesstrahlen, Polieren, Entfetten, Ätzen mit alkalischer Lösung, Reinigen mit saurer Lösung oder eine Kombination davon umfasst.

8. Verfahren nach Anspruch 6 oder 7, wobei die Elektroabscheidung eine ionische Flüssigkeit einsetzt.

9. Verfahren nach Anspruch 8, wobei die ionische Flüssigkeit 1-Ethyl-3-methylimidazoliumchlorid oder 1-Butyl-3-methylimidazoliumchlorid umfasst.

10. Verfahren nach einem der Ansprüche 6 bis 9, ferner umfassend Polieren der Aufprallschutzschicht (88).

11. Verfahren nach einem der Ansprüche 6 bis 10, wobei die galvanische Korrosionsschutzschicht (86) eine Dicke von 5 bis 50 Mikrometern aufweist und die Aufprallschutzschicht (88) eine Dicke von 25 bis 100 Mikrometern aufweist.

## Revendications

1. Ensemble pale de ventilateur comprenant un profil aérodynamique en aluminium (60) comportant une surface de réception de gaine (78) ; et une gaine conductrice (66) comprenant une surface de contact de profil aérodynamique (80) ; dans lequel la surface de réception de gaine comprend un matériau protecteur (82) ; dans lequel le matériau protecteur comprend une couche de protection contre la corrosion galvanique (86) disposée sur le profil aérodynamique en aluminium et une couche de protection contre les chocs (88) disposée sur la couche de protection contre la corrosion galvanique, dans lequel la couche de protection contre la corrosion galvanique (86) comprend de l'aluminium ayant moins de 100 ppm d'impuretés ou d'aluminium et un métal de transition, et la couche de protection contre les chocs (88) comprend de l'aluminium et un métal de transition ; et la surface de contact de profil aérodynamique (80) de la gaine conductrice est liée à la surface de réception de gaine du profil aérodynamique.

2. Ensemble pale de ventilateur selon la revendication 1, dans lequel la couche de protection contre la corrosion galvanique (86) est constituée d'aluminium pur ayant moins de 100 ppm d'impuretés.

3. Ensemble pale de ventilateur selon la revendication 1, dans lequel la couche de protection contre la corrosion galvanique (86) et la couche de protection contre les chocs (88) comprennent de l'aluminium et le même métal de transition.

4. Ensemble pale de ventilateur selon une quelconque revendication précédente, dans lequel la couche de protection contre la corrosion galvanique a une épaisseur de 5 à 50 micromètres et la couche de protection contre les chocs a une épaisseur de 25 à 100 micromètres.

5. Ensemble pale de ventilateur selon une quelconque revendication précédente, dans lequel la couche de protection contre les chocs (88) a une épaisseur supérieure à celle de la couche de protection contre la corrosion galvanique (86).

6. Procédé de fabrication d'un ensemble pale de ventilateur comprenant le nettoyage d'un profil aérodynamique en aluminium ; le dépôt électrolytique d'une couche de protection contre la corrosion galvanique (86) sur le profil aérodynamique en aluminium ; le dépôt électrolytique d'une couche de protection contre les chocs (88) sur la couche de protection contre la corrosion galvanique ; et la liaison adhésive d'une gaine conductrice (60) à la couche de protection contre les chocs (88), dans lequel la couche de protection contre la corrosion galvanique (86) comprend de l'aluminium ayant moins de 100 ppm d'impuretés ou d'aluminium et un métal de transition, et la couche de protection contre les chocs (88) comprend de l'aluminium et un métal de transition.

7. Procédé selon la revendication 6, dans lequel le nettoyage comprend un grenaillage, un polissage, un dégraissage, un décapage avec une solution alcaline, un nettoyage avec une solution acide ou une combinaison de ceux-ci.

8. Procédé selon la revendication 6 ou 7, dans lequel le dépôt électrolytique emploie un liquide ionique.

9. Procédé selon la revendication 8, dans lequel le liquide ionique comprend du chlorure de 1-éthyl-3-méthylimidazolium ou du chlorure de 1-butyl-3-méthylimidazolium.

10. Procédé selon l'une quelconque des revendications 6 à 9, comprenant en outre le polissage de la couche de protection contre les chocs (88).

11. Procédé selon l'une quelconque des revendications 6 à 10, dans lequel la couche de protection contre la corrosion galvanique (86) a une épaisseur de 5 à 50 micromètres et la couche de protection contre les chocs (88) a une épaisseur de 25 à 100 micromètres.
